# EUROPÄISCHE PATENTSCHRIFT

(11) **EP 2 800 796 B1**
(45) Veröffentlichungstag und Bekanntmachung des Hinweises auf die Patenterteilung: **02.03.2016**
(21) Anmeldenummer: 13707857.2
(22) Anmeldetag: 05.03.2013
(51) Int. Cl.: C09K 21/02, H02G 3/08, H02B 1/28, A62C 3/16, A62C 2/06

(54) **BRANDSICHERE AUSSENVERKLEIDUNG FÜR ELEKTROINSTALLATIONSSCHRÄNKE IN SCHIENENFAHRZEUGEN**
FIRE-RESISTANT OUTER CASING FOR ELECTRICAL INSTALLATION CABINETS IN RAIL VEHICLES
REVÊTEMENT EXTÉRIEUR IGNIFUGE POUR COFFRETS ÉLECTRIQUES DANS DES VÉHICULES FERROVIAIRES

(30) Priorität: 19.03.2012 DE 102012204300
(43) Veröffentlichungstag der Anmeldung: 12.11.2014
(73) Patentinhaber: Siemens Aktiengesellschaft, 80333 München (DE)
(72) Erfinder: WEILER, Joachim, 41849 Wassenberg-Orsbeck (DE)
(86) Internationale Anmeldenummer: PCT/EP2013/054349
(87) Internationale Veröffentlichungsnummer: WO 2013/139585

(56) Entgegenhaltungen:
- EP-A2- 2 043 214
- WO-A1-2009/056827
- DE-A1- 4 007 060
- DE-A1-102006 054 616
- DE-U1-202006 009 561
- US-A1- 2008 063 875

## Beschreibung

Die vorliegende Erfindung betrifft eine brandsichere Außenverkleidung für einen Elektroinstallationsschrank. Insbesondere betrifft die vorliegende Erfindung eine brandsichere Außenverkleidung für einen Elektroinstallationsschrank in einem Schienenfahrzeug.

In modernen Schienenfahrzeugen wird eine Vielzahl von elektrischen oder elektronischen Steuerungselementen verbaut. Diese Steuerungselemente übernehmen auch sicherheitsrelevante Steuerungsaufgaben, so dass die Betriebssicherheit dieser Steuerungselemente in jeder Situation gewährleistet sein muss. Auch im Fall eines Brandes innerhalb des Schienenfahrzeuges muss gewährleistet sein, dass die elektrischen oder elektronischen Steuerungselemente die ihnen zugedachten Aufgaben betriebssicher erfüllen können.

Üblicherweise werden solche Steuerungselemente in einem Elektroinstallationsschrank zusammengefasst. Eine Mehrzahl von Elektroinstallationsschränken kann dabei über ein Schienenfahrzeug bzw. den Innenraum eines Schienenfahrzeuges verteilt angeordnet sein.

In den Elektroinstallationsschränken stellt sich durch die Abwärme der verbauten elektronischen oder elektrischen Steuerungselemente eine Temperatur von bis zu 70°C ein. In der Regel sind die verbauten Steuerungselemente jedoch nur bis zu einer Temperatur kleiner 85°C betriebssicher. Bei Überschreitung dieser Grenztemperatur ist mit einem vermehrten Ausfall der Steuerungselemente zu rechnen. Gemäß den Vorgaben und Vorschriften der zuständigen Aufsichtsbehörden muss eine Betriebssicherheit der Steuerungselemente auch in einem Brandfall für mindestens 30 Minuten sichergestellt sein.

Zur Einhaltung dieser Vorgaben kann der Installationsschrank entsprechend dickwandig ausgeführt werden, wobei die Wände flammenbeständig und isolierend ausgeführt sind, so dass die Temperaturvorgaben auch im Brandfall eingehalten werden können. Eine solche Ausgestaltung eines Elektroinstallationsschrankes führt jedoch zu einem hohen Gewicht, was wiederum zu einer Erhöhung des Gesamtgewichtes des Schienenfahrzeuges führt. Ziel ist es jedoch, dass Gesamtgewicht des Schienenfahrzeuges möglichst niedrig zu halten, einerseits um die für die Bewegung des Schienenfahrzeuges benötigte Energie zu verringern, andererseits um die Nutzlast zu erhöhen.

Bei Schienenfahrzeugen, die für den Personenverkehr eingesetzt werden sollen, ist es darüber hinaus wünschenswert, dass das Interieur des Personenabteils ansprechend und angenehm gestaltet ist. Hierzu werden gerne Holzmaterialien in dem Schienenfahrzeug verbaut. So kann es beispielsweise vorgesehen sein, dass Wandpaneele oder Raumtrenner zumindest teilweise in Holz ausgeführt sind.

Elektroinstallationsschränke finden sich vielfach im Kopf oder Endbereich des Schienenfahrzeuges, einem Bereich, der in bestimmten Schienenfahrzeugtypen üblicherweise mit Holzverkleidungen ausgestattet ist. Die Elektroinstallationsschränke befinden sich hinter diesen Holzverkleidungen.

Durch das Vorsehen von Holzverkleidungen werden jedoch weitere Brandlasten in das Schienenfahrzeug eingebracht, die im Unglücksfall Feuer fangen können.

Eine Verkleidung eines Elektroinstallationsschrankes ist in US 2008/0063875 A1 offenbart.

Es ist daher die Aufgabe der vorliegenden Erfindung, einen Elektroinstallationsschrank bereitzustellen, der bei akzeptablem Gesamtgewicht ein Interieur-kompatibles Äußeres aufweist.

Gelöst wird diese Aufgabe durch einen Elektroinstallationsschrank gemäß Anspruch 1.

Es wird somit ein Elektroinstallationsschrank zur Aufnahme von elektrischen und/oder elektronischen Steuerungselementen vorgeschlagen, aufweisend einen Installationsraum, eine innere Tür und eine Außenverkleidung, welcher dadurch gekennzeichnet ist, dass die Außenverkleidung zumindest teilweise aus einem Furniersperrholz gebildet ist, wobei wenigstens eine Schicht des Furniersperrholzes aus einem im Brandfall expanierenden Material gebildet ist.

Es wird somit vorgeschlagen, den Elektroinstallationsschrank gegenüber beispielsweise dem Fahrgastraum durch eine Furniersperrholzplatte bzw. Multiplex-Platte zu verkleiden, welche eine Schicht eines brandhemmenden und im Brandfall isolierend wirkenden Materials aufweist. Durch das im Brandfall expandierende oder aufschäumende Material wird eine Isolierschicht gegenüber der feuerbedingten Temperatureinwirkung gebildet, die ein Ansteigen der Temperatur innerhalb des Elektroinstallationsschrankes zumindest für die vorgesehene Zeit von 30 Minuten verhindern kann. Durch die Verwendung eines entsprechenden Furniersperrholzes bzw. einer entsprechenden Multiplex-Platte kann auf eine zusätzliche isolierende feuerfeste Ausgestaltung des Elektroinstallationsschrankes verzichtet werden. Gleichzeitig bietet das Furnierholz ein mit der Interieurgestaltung verträgliches angenehmes äußeres Erscheinungsbild. Darüber hinaus kann durch die erfindungsgemäße Ausgestaltung eines Elektroinstallationsschrankes eine Gewichtsersparnis erzielt werden, was zu einer weiteren Verringerung des Gesamtgewichtes des Schienenfahrzeuges führt.

Gemäß einer Ausgestaltung des erfindungsgemäßen Elektroinstallationsschrankes weist das im Brandfall expandierende Material ein Alkalisilikat auf. Bevorzugt handelt es sich bei dem Alkalisilikat um ein wasserhaltiges Natriumsilikat. Zusätzlich kann das Material organische Zusätze, Glasfasern, Glasgewebe oder auch ein Drahtnetz zur Erhöhung der mechanischen Stabilität aufweisen.

Durch thermische Einwirkung oberhalb einer Temperatur von 100°C beginnt das Material Blasen zu werfen und aufzuschäumen. Hierdurch entsteht eine thermisch isolierend wirkende Schaumschicht, die Temperaturen von bis zu 600° standhalten kann.

Gemäß einer weiteren Ausgestaltung des erfindungsgemäßen Elektroinstallationsschrankes weist die Schicht, welche das im Brandfall expandierende Material aufweist, eine Dicke zwischein ≥ 1,0 mm und ≤ 5,0 mm auf. Es hat sich gezeigt, dass eine derartig dünne Schicht ausreichend ist, um im Brandfall eine hinreichende thermische Isolierung der im Inneren des Elektroinstallationsschranks verbauten Elemente zu gewährleisten, so dass die Funktionssicherheit der Elemente für einen hinreichenden Zeitraum sichergestellt ist.

In einer weiteren Ausgestaltung des erfindungsgemäßen Elektroinstallationsschrankes weist das Furniersperrholz wenigstens zwei Schichten auf, welche aus einem im Brandfall expandierenden Material gebildet sind. Hierdurch ist es möglich, die thermische Isolierung weiter zu erhöhen.

In einer weiteren Ausgestaltung des erfindungsgemäßen Elektroinstallationsschrankes sind der Installationsraum und die innere Tür aus einem Metall, wie beispielsweise Stahlblech und/oder einem Aluminiumblech gefertigt. Hierbei sind unter Stahlblech und/oder Aluminiumblech auch Bleche aus Stahl- und/oder Aluminiumlegierungen zu verstehen.

In einer bevorzugten Ausgestaltung der Erfindung ist die Außenverkleidung im Bereich der inneren Tür als Türelement ausgebildet. Hierdurch lässt sich die Außenverkleidung in einfacher Weise öffnen und gibt so den Zugang zum Elektroinstallationsschrank frei.

In einer weiteren bevorzugten Ausgestaltung der Erfindung sind die innere Tür und der als Türelement ausgebildete Bereich der Außenverkleidung gegenläufig angeschlagen. Gegenläufig angeschlagen bedeutet dabei, dass sich beispielsweise das Türelement der Außenverkleidung nach rechts öffnen lässt, während die innere Tür nach links geöffnet wird. Hierdurch ist eine einfache Zugänglichkeit zu den im Installationsraum des Elektroinstallationsschrankes verbauten elektrischen und/oder elektronischen Elementen möglich.

Gemäß einer weiteren Ausgestaltung des erfindungsgemäßen Elektroinstallationsschranks lassen sich die innere Tür und der als Türelement ausgebildete Bereich der Außenverkleidung gemeinsam öffnen.

In einer weiter bevorzugten Ausgestaltung des erfindungsgemäßen Elektroinstallationsschranks weist die Außenverkleidung als äußere Schicht eine HPL-Schicht auf. Unter HPL-Schicht (High Pressure Laminate) werden Werkstoffe verstanden, bei welchen Fasermaterialien wie beispielsweise Holz, Papier, Pappe oder Textilfasern in Melamin- oder Phenolharz getrennt und unter Druck und Temperatur miteinander zu einer Platte verpresst werden. Durch die Verwendung hitzebeständiger Harze erhält man dabei Oberflächen, welche pflegeleicht und gut zu reinigen sind. Darüber hinaus sind solche Schichten lichtbeständig, geruchsneutral und im Wesentlichen unempfindlich gegen Flüssigkeiten wie beispielsweise Wasser, Alkohol oder organische Lösemittel.

Darüber hinaus betrifft die vorliegende Erfindung die Verwendung eines Furniersperrholzes, aufweisend wenigstens eine Schicht aus einem im Brandfall expandierenden Material, als zum Fahrgastraum gerichtete Außenverkleidung für einen Elektroinstallationsschrank in einem Schienenfahrzeug.

Die Erfindung wird nachfolgend anhand von Figuren näher erläutert.
- Fig. 1: zeigt schematisch den Aufbau einer Ausgestaltung einer erfindungsgemäß zu verwendenden Außenverkleidung;
- Fig. 2: zeigt schematisch den Aufbau einer Ausgestaltung eines erfindungsgemäßen Elektroinstallationsschranks.

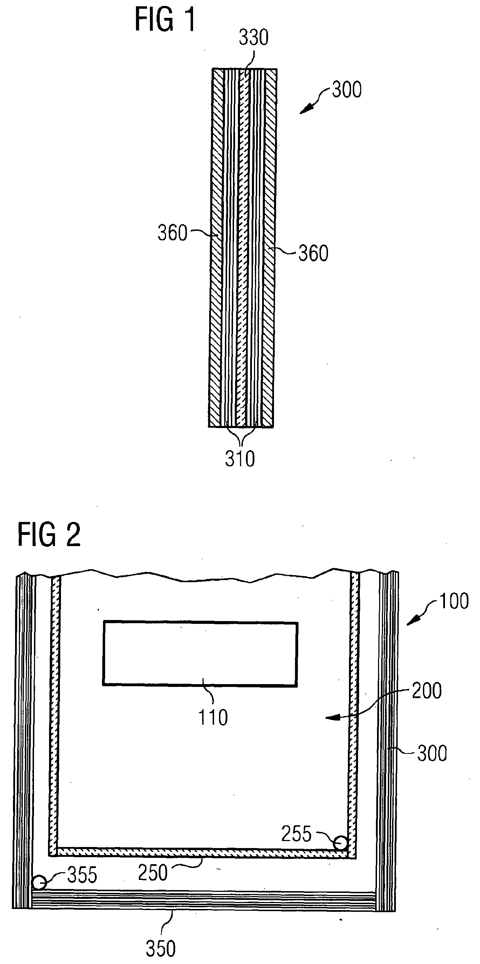

Figur 1 zeigt schematisch den Aufbau einer Ausgestaltung einer erfindungsgemäß verwendeten Außenverkleidung 300. Die Außenverkleidung 300 besteht aus einem Furniersperrholz 310, welches zumindest eine Schicht 330 aus einem im Brandfall expandierenden Material aufweist. Die sichtbaren Flächen der Außenverkleidung 300 können darüber hinaus mit einer HPL-Schicht 360 belegt sein, um die Außenverkleidung pflegeleicht und widerstandsfähig auszugestalten. Im Brandfall führt die durch den Brand auf die Außenverkleidung 300 einwirkende Temperatur zu einer Expansion des Materials in der Schicht 300. Hierdurch wird das Furniersperrholz auseinandergedrückt und es entsteht eine thermische Isolierschicht, die eine weitere Temperaturerhöhung auf der von der Brandquelle abgewendeten Seite der Außenverkleidung weitestgehend zumindest für einen hinreichenden Zeitraum verhindern kann.

Figur 2 zeigt den schematischen Aufbau einer Ausgestaltung eines erfindungsgemäßen Elektroinstallationsschranks 100. Der Elektroinstallationsschrank 100 weist einen Installationsraum 200 auf, in welchem Steuerungselemente 110 verbaut sind. Der Elektroinstallationsschrank 100 ist dabei beispielsweise in Form eines Stahlgehäuses ausgebildet. Zugänglichkeit zu den Steuerungselementen 110 wird über die Innentür 250 des Elektroinstallationsschranks 100 ermöglicht. Gegenüber dem Fahrgastraum ist der Elektroinstallationsschrank 100 durch eine Außenverkleidung 300 verkleidet. Die Außenverkleidung 300 ist zumindest teilweise aus einem Furniersperrholz gebildet, wobei wenigstens eine Schicht des Furniersperrholzes aus einem im Brandfall expandierenden Material gebildet ist. Im Bereich der inneren Tür 250 ist die Außenverkleidung als Türelement 350 ausgebildet, so dass ein Entfernen der Außenverkleidung, um an die innere Tür 250 zu gelangen, in einfacher Weise möglich ist. In der gezeigten Ausführungsform sind dabei die innere Tür 250 und das Türelement 350 gegenläufig angeschlagen (255, 355).

## Patentansprüche

1. Elektroinstallationsschrank (100) zur Aufnahme von elektrischen und/oder elektronischen Steuerungselementen (110), aufweisend einen Installationsraum (200), eine innere Tür (250) und eine Außenverkleidung (300),
**dadurch gekennzeichnet, dass**
die Außenverkleidung (300) zumindest teilweise aus einem Furniersperrholz (310) gebildet ist, wobei wenigstens eine Schicht (330) des Furniersperrholzes (310) aus einem im Brandfall expandierenden Material gebildet ist.

2. Elektroinstallationsschrank (100) gemäß Anspruch 1,
wobei das im Brandfall expandierende Material ein Alkalisilikat aufweist.

3. Elektroinstallationsschrank (100) gemäß einem der vorhergehenden Ansprüche,
wobei die das im Brandfall expandierende Material aufweisende Schicht eine Dicke zwischen ≥ 1,0 mm und ≤ 5,0 mm aufweist.

4. Elektroinstallationsschrank (100) gemäß einem der vorhergehenden Ansprüche,
wobei das Furniersperrholz (310) wenigstens zwei Schichten aufweist, welche aus einem im Brandfall expandierenden Material gebildet sind.

5. Elektroinstallationsschrank (100) gemäß einem der vorhergehenden Ansprüche,
wobei der Installationsraum (200) und die innere Tür (250) aus einem Material, vorzugsweise einem Stahlblech und/oder einem Aluminiumblech gefertigt sind.

6. Elektroinstallationsschrank (100) gemäß einem der vorhergehenden Ansprüche,
wobei die Außenverkleidung (300) im Bereich der inneren Tür (250) als Türelement (350) ausgebildet ist.

7. Elektroinstallationsschrank (100) gemäß Anspruch 7,
wobei die innere Tür (250) und das Türelement (350) gegenläufig angeschlagen sind.

8. Elektroinstallationsschrank (100) gemäß einem der Ansprüche 1 bis 6,
wobei sich die innere Tür (250) und das Türelement (350) gemeinsam öffnen lassen.

9. Elektroinstallationsschrank (100) gemäß einem der vorherigen Ansprüche,
wobei die Außenverkleidung (300) als eine äußere Schicht eine HPL-Schicht (360) aufweist.

10. Verwendung eines Furniersperrholzes (310), aufweisend wenigstens eine Schicht (330) aus einem im Brandfall expandierenden Material als zum Fahrgastraum gerichtete Außenverkleidung (300) für einen Elektroinstallationsschrank (100) in einem Schienenfahrzeug.

## Claims

1. Electrical installation cabinet (100) for receiving electrical and/or electronic control elements (110), having an installation space (200), an inner door (250) and an outer casing (300),
**characterized in that**
the outer casing (300) is at least partially formed from a veneered plywood (310), wherein at least one layer (330) of the veneered plywood (310) is formed from a material which expands in the event of a fire.

2. Electrical installation cabinet (100) according to Claim 1, wherein the material which expands in the event of a fire comprises an alkali silicate.

3. Electrical installation cabinet (100) according to either of the preceding claims,
wherein the layer comprising the material which expands in the event of a fire has a thickness of between ≥ 1.0 mm and ≤ 5.0 mm.

4. Electrical installation cabinet (100) according to one of the preceding claims,
wherein the veneered plywood (310) comprises at least two layers that are formed from a material which expands in the event of a fire.

5. Electrical installation cabinet (100) according to one of the preceding claims,
wherein the installation space (200) and the inner door (250) are produced from a metal, preferably a steel sheet and/or an aluminum sheet.

6. Electrical installation cabinet (100) according to one of the preceding claims,
wherein the outer casing (300) is formed in the region of the inner door (250) as a door element (350).

7. Electrical installation cabinet (100) according to Claim 6, wherein the inner door (250) and the door element (350) are hung on opposite sides.

8. Electrical installation cabinet (100) according to one of Claims 1 to 6,
wherein the inner door (250) and the door element (350) can be opened in the same direction.

9. Electrical installation cabinet (100) according to one of the preceding claims,
wherein the outer casing (300) comprises an HPL layer (360) as an outer layer.

10. Use of a veneered plywood (310), comprising at least one layer (330) of a material which expands in the event of a fire, as an outer casing (300), directed toward the passenger compartment, for an electrical installation cabinet (100) in a rail vehicle.

## Revendications

1. Coffret (100) électrique pour loger des éléments (110) de commande électriques et/ou électroniques, comprenant un espace (200) d'installation, une porte (250) intérieure et un habillage (300) extérieur,
**caractérisé en ce que**
l'habillage (300) extérieur est formé au moins en partie d'un bois (310) de contreplaqué, au moins une couche (330) du bois (310) de contreplaqué étant en un matériau s'expansant en cas d'incendie.

2. Coffret (100) électrique suivant la revendication 1, dans lequel le matériau s'expansant en cas d'incendie comporte un silicate de métal alcalin.

3. Coffret (100) électrique suivant l'une des revendications précédentes,
dans lequel la couche ayant le matériau s'expansant en cas d'incendie a une épaisseur comprise entre ≥ 1,0 mm et ≤ 5,0 mm.

4. Coffret (100) électrique suivant l'une des revendications précédentes,
dans lequel le bois (310) de contreplaqué a au moins deux couches, qui sont en un matériau s'expansant en cas d'incendie.

5. Coffret (100) électrique suivant l'une des revendications précédentes,
dans lequel l'espace (200) d'installation et la porte (250) intérieure sont en un matériau, de préférence en une tôle d'acier et/ou en une tôle d'aluminium.

6. Coffret (100) électrique suivant l'une des revendications précédentes,
dans lequel l'habillage (300) extérieur est, dans la région de la porte (250) intérieure, constitué en élément (350) de porte.

7. Coffret (100) électrique suivant la revendication précédente 6,
dans lequel la porte (250) intérieure et l'élément (350) de porte se touchent en opposition.

8. Coffret (100) électrique suivant l'une des revendications 1 à 6,
dans lequel la porte (250) intérieure et l'élément (350) de porte peuvent être ouverts conjointement.

9. Coffret (100) électrique suivant l'une des revendications précédentes,
dans lequel l'habillage (300) extérieur a une couche (360) HPL comme couche extérieure.

10. Utilisation d'un bois (310) de contreplaqué ayant au moins une couche (330) en un matériau s'expansant en cas d'incendie comme habillage (300) extérieur dirigé vers l'espace passager d'un coffret (100) électrique dans un véhicule ferroviaire.
